# FASCICULE DE BREVET EUROPEEN

(11) **EP 4 264 030 B1**
(45) Date de publication et mention de la délivrance du brevet: **27.11.2024**
(21) Numéro de dépôt: 21851830.6
(22) Date de dépôt: 15.12.2021
(51) Int. Cl.: F02C 7/36, F02C 7/32

(54) **ENSEMBLE POUR TURBOMACHINE D'AÉRONEF COMPRENANT UN SUPPORT D'ÉQUIPEMENTS**
FLUGZEUGTURBINENTRIEBWERKANORDNUNG MIT EINEM HALTER FÜR VERBRAUCHER
AIRCRAFT TURBINE ENGINE ASSEMBLY COMPRISING A SUPPORT FOR ACCESSORIES

(30) Priorité: 15.12.2020 FR 2013272
(43) Date de publication de la demande: 25.10.2023
(73) Titulaire: SAFRAN AIRCRAFT ENGINES, 75015 Paris (FR)
(72) Inventeur: BEUTIN, Bruno Albert, 77550 Moissy-Cramayel (FR); DELAFORGE, Anthony Pierre Guy, 77550 Moissy-Cramayel (FR); ZSIGA, Zoltan, 77550 Moissy-Cramayel (FR)
(74) Mandataire: Cabinet Beau de Loménie
(86) Numéro de dépôt international: PCT/FR2021/052341
(87) Numéro de publication internationale: WO 2022/129788

(56) Documents cités:
- EP-A1- 2 696 057
- FR-A1- 2 946 091
- FR-A1- 3 007 458
- FR-A1- 3 012 845

## Description

### Domaine technique

Le présent exposé concerne le domaine général des turbomachines, en particulier des turbomachines aéronautiques. Le présent exposé concerne le montage d'un support d'équipements dans une telle turbomachine, et plus particulièrement un ensemble pour turbomachine d'aéronef comprenant un support d'équipements.

### Technique antérieure

Dans une turbomachine, utilisée par exemple pour la propulsion d'un aéronef tel qu'un avion ou un hélicoptère, les équipements et accessoires tels que les pompes pour la production d'énergie hydraulique, l'alimentation en carburant et la lubrification, les générateurs électriques pour la production de puissance électrique, etc., sont regroupés sur un support d'équipements communément appelé boîtier ou relais d'accessoires, ou encore AGB pour *« Accessory Gear Box ».* Un tel support porte généralement un ou plusieurs trains d'engrenages qui sont entraînés en rotation par un prélèvement de puissance sur un arbre de la turbomachine et sur lesquels viennent se coupler les différents accessoires.

Pour diverses raisons, le support d'équipements peut être prévu autour d'un compresseur de la turbomachine. Dans ces circonstances, il est alors naturel de fixer au moins partiellement le support d'équipements sur le carter du compresseur. Toutefois, cela peut conduire à un phénomène d'ovalisation du carter, ce qui grève les performances du compresseur. Face à ce problème, la demande de brevet FR 2 952 672 de la Demanderesse propose de suspendre le support d'équipements à la poutre (aussi appelée pylône) située au-dessus du carter du compresseur et par laquelle le turboréacteur est accroché à l'aile d'un avion, dans une configuration où la suspension du turboréacteur à cette poutre s'effectue au niveau d'un moyeu de carter intermédiaire du moteur. Bien qu'apportant satisfaction dans certains cas, une telle solution peut être difficile à mettre en oeuvre, notamment lorsque le turboréacteur est accroché à l'aéronef par un autre système, ou encore lorsque le support d'équipements est situé sous le carter du compresseur et ne s'étend pas au-dessus de ce carter. En outre, cette solution nécessite quelques liaisons qui peuvent être complexes ou encombrantes. FR 3 007 458 et FR 3 012 845, de la Demanderesse, divulguent d'autres turbomachines comprenant un support d'équipement.

### Exposé de l'invention

Le présent exposé vise à remédier au moins en partie à ces inconvénients.

A cet effet, le présent exposé concerne un ensemble pour turbomachine d'aéronef, comprenant un moyeu de carter intermédiaire, un support d'équipements, et une boîte de transfert comportant un arbre de transmission de puissance configuré pour transmettre de la puissance mécanique, prélevée sur un arbre moteur de la turbomachine, à au moins un équipement monté sur le support d'équipements, dans lequel la boîte de transfert comprend un élément structural entourant l'arbre de transmission de puissance et fixant rigidement le support d'équipements au moyeu de carter intermédiaire.

On appelle axe de la turbomachine, un axe de rotation d'un rotor de la turbomachine, par exemple un rotor de compresseur. La direction axiale correspond à la direction de l'axe de la turbomachine et une direction radiale est une direction perpendiculaire à cet axe et coupant cet axe. De même, un plan axial est un plan contenant l'axe de la turbomachine et un plan radial est un plan perpendiculaire à cet axe. Une circonférence s'entend comme un cercle appartenant à un plan radial et dont le centre appartient à l'axe de la turbomachine. Une direction tangentielle ou circonférentielle est une direction tangente à une circonférence ; elle est perpendiculaire à l'axe de la turbomachine mais ne passe pas par l'axe.

Sauf précision contraire, les adjectifs intérieur et extérieur sont utilisés en référence à une direction radiale de sorte que la partie intérieure d'un élément est, suivant une direction radiale, plus proche de l'axe de la turbomachine que la partie extérieure du même élément.

Enfin, sauf précision contraire, les termes amont et aval sont utilisés en référence à la direction globale d'écoulement dans une turbomachine, à savoir du compresseur vers la turbine.

Dans une turbomachine, le carter intermédiaire est situé en amont du carter de compresseur, le cas échéant en amont du carter de compresseur haute pression (et optionnellement en aval du carter de compresseur basse pression) lorsque la turbomachine comprend plusieurs compresseurs. Lorsque la turbomachine comprend une soufflante, le carter intermédiaire est situé en aval du carter de rétention de la soufflante, qui est disposé annulairement autour de la soufflante.

Le moyeu de carter intermédiaire désigne une partie radialement intérieure du carter intermédiaire. Dans une turbomachine à double flux, le moyeu de carter intermédiaire peut désigner la partie du carter intermédiaire qui sépare le flux primaire du flux secondaire. Le rôle du moyeu de carter intermédiaire est de permettre d'avoir une continuité de structure, entre le flux primaire et le flux secondaire, pour faire transiter les efforts vers les suspensions amont de la turbomachine. De plus, le moyeu du carter intermédiaire peut servir à fixer les chapes des bielles de reprise de poussée, les sorties de décharge du compresseur basse pression en air et différents équipements tels que des vérins, des sondes, etc.

La boîte de transfert, communément appelée TGB (pour *« Transfer Gear Box* ») abrite au moins en partie l'arbre de transmission de puissance, également appelé arbre de transfert, configuré pour transmettre au support d'équipements de la puissance mécanique prélevée sur un arbre moteur, par exemple un arbre de corps haute pression ou basse pression de la turbomachine. La liaison cinématique entre l'arbre de transmission de puissance et l'arbre moteur peut s'effectuer via un engrenage et par l'intermédiaire d'un arbre, notamment un arbre radial. Ainsi, la puissance mécanique peut être transmise à au moins un équipement monté sur le support d'équipements afin d'entraîner en rotation une partie mobile de l'équipement, généralement par l'intermédiaire d'engrenages prévus entre l'arbre de transmission de puissance et l'équipement. La boîte de transfert s'étend donc entre le moyeu de carter intermédiaire, qui abrite partiellement ledit arbre moteur et le cas échéant l'arbre radial, et le support d'équipements.

L'ensemble pour turbomachine d'aéronef selon le présent exposé utilise astucieusement la boîte de transfert en y incluant un élément structural afin de fixer rigidement le support d'équipements au moyeu de carter intermédiaire, ce qui permet de s'affranchir d'une fixation du support d'équipements aussi bien sur un carter de compresseur que sur une poutre d'accroche à une aile d'avion. Un élément structural est un élément configuré pour assurer un rôle de maintien de structure et de reprise d'efforts. En l'occurrence, l'élément structural permet la fixation autonome du support d'équipements au moyeu de carter intermédiaire, même si, comme on le verra par la suite, d'autres éléments peuvent intervenir pour reprendre les efforts selon certains degrés de liberté. En d'autres termes, l'élément structural est tel que sans cet élément, le support d'équipements ne serait pas fixé rigidement au moyeu de carter intermédiaire.

Grâce au fait que la boîte de transfert comprend un élément structural fixant rigidement le support d'équipements au moyeu de carter intermédiaire, le support d'équipements s'adapte à tout type de turbomachine d'aéronef sans nécessiter l'ajout d'une poutre, et les fixations du support d'équipements sont en outre simplifiées, ce qui dégage de la liberté de conception pour d'autres aspects de la turbomachine.

Dans certains modes de réalisation, le support d'équipements est formé par un boîtier qui présente une face amont située en aval du moyeu de carter intermédiaire, et l'élément structural est fixé rigidement à ladite face amont. La fixation via l'élément structural est donc simple et robuste.

Dans certains modes de réalisation, l'ensemble comprend en outre deux bras reliant le support d'équipements au moyeu de carter intermédiaire. Ces bras permettent de reprendre principalement les moments suivant trois axes orthogonaux, ces moments pouvant devenir significatifs lorsque le support d'équipements est dimensionné pour porter au moins trois équipements, tandis que l'élément structural peut être configuré pour reprendre principalement les efforts selon suivant lesdits trois axes. Ainsi, les six degrés de liberté du support d'équipements sont bien repris.

Dans certains modes de réalisation, les bras sont prévus de part et d'autre de l'élément structural. Cela répartit la reprise d'efforts entre les deux bras.

Dans certains modes de réalisation, l'ensemble est dépourvu d'autre fixation entre le support d'équipements et le moyeu de carter intermédiaire que l'élément structural et lesdits deux bras. Le nombre de fixations du support d'équipements au moyeu de carter intermédiaire est donc minimisé, ce qui dégage encore davantage de liberté de conception pour d'autres aspects de la turbomachine.

Dans certains modes de réalisation, au moins l'un des deux bras est configuré pour reprendre les efforts dans l'axe des bras (en traction et/ou compression).

Plus particulièrement, dans certains modes de réalisation, au moins l'un des deux bras est fixé au moyeu de carter intermédiaire et/ou au support d'équipements de manière articulée de façon à reprendre les efforts uniquement dans l'axe des bras (en traction et/ou compression). Une articulation peut comprendre deux pièces mécaniquement en mouvement l'une par rapport à l'autre, auquel cas le bras concerné peut être une bielle, par exemple une bielle rotulée, et/ou comprendre une partie élastiquement déformable de façon à permettre un certain mouvement du bras, qui peut alors être une simple poutre, par rapport au moyeu de carter intermédiaire et/ou au support d'équipements.

L'élément structural et les deux bras fixés de manière articulée sont un exemple de la fixation isostatique précitée, toutefois d'autres exemples sont envisagés. Par exemple, il est possible d'utiliser davantage de bras si ceux-ci présentent des degrés de liberté suffisants pour ne pas rendre la liaison hyperstatique.

Dans certains modes de réalisation, l'élément structural est formé par un fourreau de la boîte de transfert. Le fourreau peut entourer l'arbre de transmission de puissance au moins sur une partie de la longueur dudit arbre. Le fourreau peut être un élément tubulaire, voire cylindrique à section quelconque, optionnellement circulaire. Le fourreau peut être un boîtier extérieur de la boîte de transfert, configuré pour loger le reste de la boîte de transfert.

Dans certains modes de réalisation, l'arbre de transmission de puissance s'étend sensiblement perpendiculairement à la face amont du support d'équipements.

Dans certains modes de réalisation, la face amont du support d'équipements est en aval du moyeu de carter intermédiaire. Notamment, la face amont du support d'équipements peut être à une certaine distance en aval du moyeu de carter intermédiaire, afin de libérer de la place pour monter des équipements sur la face amont du support d'équipements. De cette façon, les équipements peuvent être mieux répartis sur le support d'équipement. La face amont peut être transversale à l'axe de la turbomachine.

Ainsi, dans certains modes de réalisation, l'ensemble pour turbomachine d'aéronef comprend au moins un équipement monté sur la face amont du support d'équipements. Ledit équipement est, bien entendu, distinct de la boîte de transfert.

Ledit équipement peut avoir une dimension axiale inférieure à la distance (notamment axiale) entre ladite face amont et un flasque annulaire aval du moyeu de carter intermédiaire.

En outre, le support d'équipements peut être monté de façon à se trouver, dans la turbomachine, axialement au niveau d'un carter de compresseur. Dans ce cas, l'accessibilité et la maintenance du support d'équipements sont inchangées pour les opérateurs, malgré le changement de fixation.

Dans certains modes de réalisation, la fixation du support d'équipements au moyeu de carter intermédiaire est isostatique. Par conséquent, le dimensionnement de l'ensemble est facilité et la fixation ne nécessite aucun réglage lors de son montage.

Dans certains modes de réalisation, la turbomachine d'aéronef comprend un carter de compresseur, le carter de compresseur ayant un diamètre relativement petit par rapport au diamètre de la soufflante ou de l'hélice. Par exemple, le diamètre du carter de compresseur peut être, au niveau de sa fixation avec le moyeu du carter intermédiaire, égal au diamètre intérieur du moyeu de carter intermédiaire. De tels carters de compresseur, relativement petits au regard des turbomachines d'aéronef existantes, sont particulièrement sujets au phénomène d'ovalisation et l'encombrement est un problème particulièrement aigu sur les turbomachines correspondantes. Le mode de fixation proposé dans le présent exposé est donc particulièrement avantageux dans ce contexte.

Dans certains modes de réalisation, le support d'équipements est fixé au moyeu de carter intermédiaire de façon à se trouver, en position d'utilisation, en majorité en-dessous d'un axe du moyeu de carter intermédiaire.

La position d'utilisation est une position dans laquelle l'ensemble pour turbomachine est intégré dans une turbomachine elle-même assemblée à un aéronef. Dans cette position, au moins 50% du volume du support d'équipements se trouve en-dessous de l'axe du moyeu de carter intermédiaire. De telles situations se rencontrent lorsque le support d'équipements est dit « monté à six heures » (6h), par exemple, en se référant à une horloge imaginaire dont l'axe 12h-6h est aligné avec la verticale, 12h étant en haut et 6h en bas. Le support d'équipements peut aussi être monté à 5h, à 7h, etc. Le point de référence peut être un centre de gravité du support d'équipements, éventuellement pourvu de ses équipements et accessoires.

Dans certains modes de réalisation, le support d'équipements s'étend selon une portion d'anneau. Le support d'équipements peut donc être prévu aussi près que possible de l'axe principal, autour du compartiment moteur, de façon à conserver une turbomachine compacte. La portion d'anneau peut être un arc de cercle, centré ou non sur l'axe de la turbomachine.

Dans certains modes de réalisation, le moyeu de carter intermédiaire comprend un flasque annulaire aval auquel est fixé l'élément structural, et la boîte de transfert comprend un renvoi d'angle disposé dans le moyeu de carter intermédiaire en amont du flasque annulaire aval, ledit renvoi d'angle reliant l'arbre de transmission de puissance à l'arbre moteur de la turbomachine par l'intermédiaire d'un arbre radial de la turbomachine. Le renvoi d'angle peut permettre la transmission de puissance mécanique entre l'arbre radial et l'arbre de transmission de puissance. Le flasque annulaire aval peut être le même que celui mentionné précédemment.

Dans certains modes de réalisation, la portion d'anneau couvre un secteur angulaire inférieur à 180°.

Le présent exposé concerne également une turbomachine d'aéronef comprenant un ensemble selon l'un quelconque des modes de réalisation précédemment définis. L'aéronef peut être, en particulier, un avion ou un hélicoptère. La turbomachine peut être un turboréacteur, un turbopropulseur, une unité de puissance auxiliaire (communément appelée APU pour *« Auxi*/*iary Power Unit* »), etc.

Dans certains modes de réalisation, la turbomachine d'aéronef comprend, en aval du carter intermédiaire, un carter de compresseur et un carter de chambre de combustion, et l'ensemble décrit précédemment est dépourvu de fixation entre le support d'équipements et le carter de compresseur, et dépourvu de fixation entre le support d'équipements et le carter de chambre de combustion. Les performances de la turbomachine sont donc préservées.

### Brève description des dessins

D'autres caractéristiques et avantages de l'objet du présent exposé ressortiront de la description suivante de modes de réalisation, donnés à titre d'exemples non limitatifs, en référence aux figures annexées.
[Fig. 1] La figure 1 est une coupe schématique d'une turbomachine d'aéronef comprenant un ensemble selon un premier mode de réalisation.
[Fig. 2] La figure 2 est une vue de dessous, en perspective, d'une partie de la turbomachine d'aéronef selon le premier mode de réalisation.
[Fig. 3] La figure 3 est une vue de côté, en position d'utilisation, de la partie de la turbomachine de la figure 2.

### Description détaillée

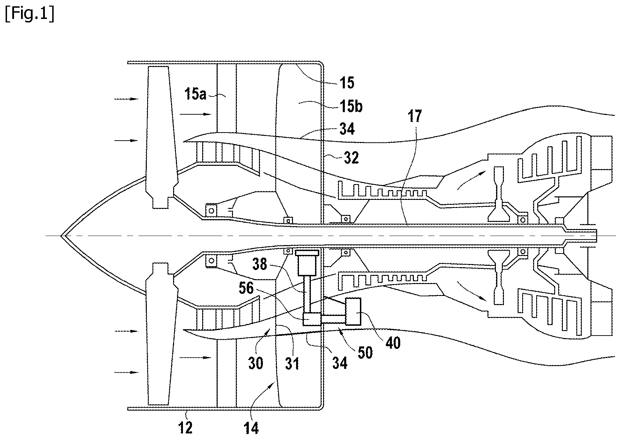

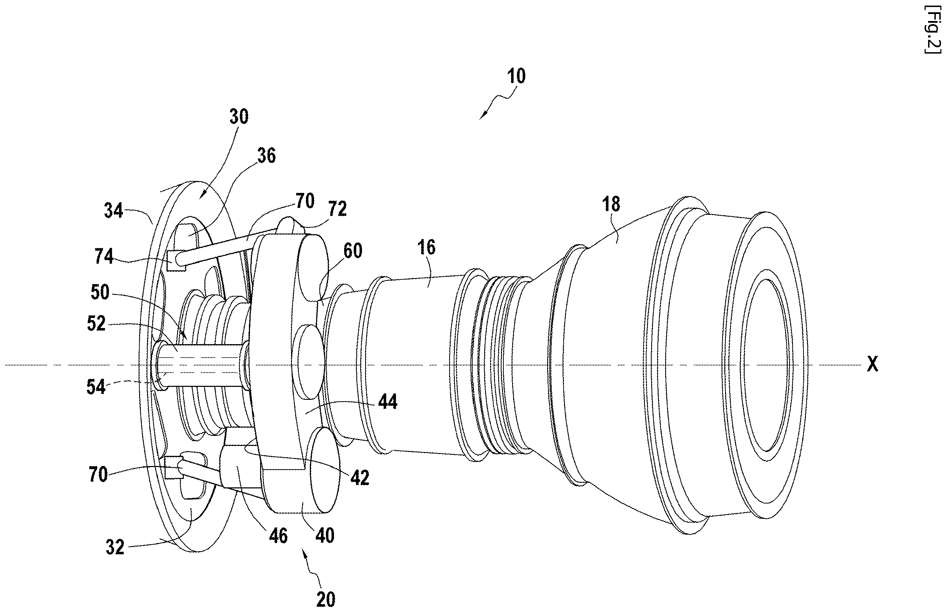

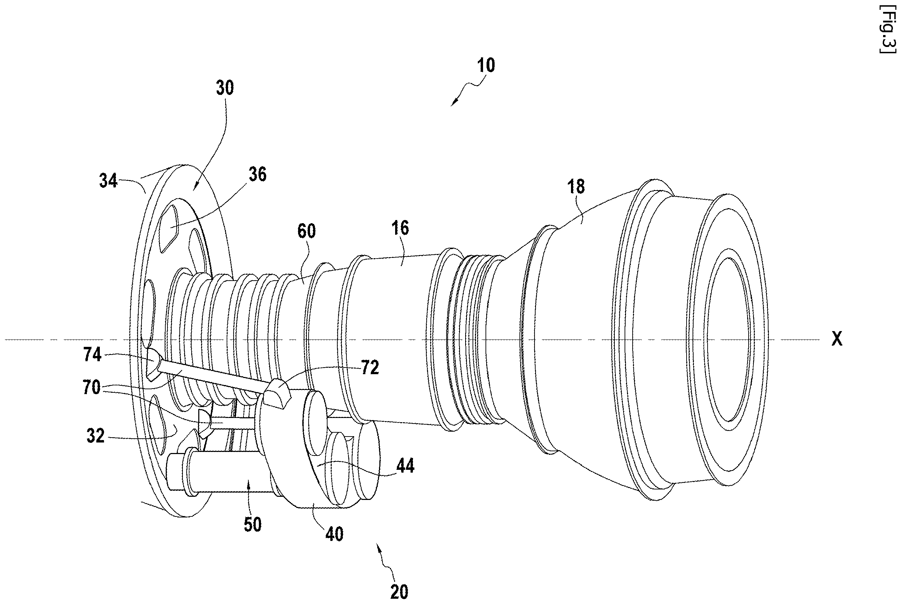

La figure 1 représente en coupe, de manière simplifiée, une turbomachine 10 selon un mode de réalisation. Les figures 2 et 3 représentent une partie de la turbomachine 10 en perspective, en vue de dessous et de côté respectivement. La turbomachine 10 est en l'espèce un turboréacteur à double corps et double flux, mais le présent exposé s'étend à d'autres types de turbomachines, comme mentionné précédemment. La turbomachine 10, ou une turbomachine d'un autre type, peut être montée sous l'aile d'un aéronef, sur l'aile ou encore à l'arrière du fuselage de l'aéronef.

La turbomachine 10 s'étend généralement selon un axe principal X formant axe de rotation d'au moins une partie de ses rotors. La turbomachine 10 peut comprendre, de l'amont vers l'aval, un carter de rétention de soufflante 12, un carter intermédiaire 14, un carter de compresseur 60, un carter de chambre de combustion 16 et un carter de turbine 18. Le cas échéant, certains de ces carters peuvent être divisés en plusieurs sections ; par exemple, le carter de turbine 18 peut comprendre un carter de turbine haute pression, un carter inter-turbines et un carter de turbine basse pression.

Les différents carters peuvent être annulaires, voire axisymétriques, et centrés sur l'axe X.

Le carter intermédiaire 14 comprend une virole externe 15 et un moyeu de carter intermédiaire 30. Le moyeu de carter intermédiaire 30 peut être relié à la virole externe 15 par des redresseurs 15a (communément appelées OGV pour *« Out*/*et Guide Vanes* ») pour redresser le flux secondaire issu de la soufflante, ainsi que par des bras structuraux 15b.

Le moyeu de carter intermédiaire 30 peut former une séparation entre une veine dite primaire, configurée pour guider le flux primaire passant par le coeur de la turbomachine et destiné à participer à la combustion et à l'entraînement d'au moins une turbine, et une veine dite secondaire, configurée pour guider le flux secondaire passant par les OGV 15a pour générer l'essentiel de la poussée de la turbomachine 10.

En l'espèce, le moyeu de carter intermédiaire 30 comprend un flasque annulaire aval 32 s'étendant radialement vers l'intérieur à partir d'une partie aval d'une portion tronconique 34. La portion tronconique 34 peut être, au moins dans sa partie aval, sensiblement concentrique avec la virole externe 15 et, au cas particulier, axisymétrique autour de l'axe principal X.

Le moyeu de carter intermédiaire 30 peut en outre comprendre, ici dans le flasque aval 32, une ou plusieurs ouvertures 36 pour le passage de sorties de décharge du compresseur, notamment compresseur basse pression. Ces sorties sont communément appelées sorties VBV (pour *« Variable Bleed Valve* »). En l'espèce, les ouvertures 36 sont ovales. Les ouvertures 36 peuvent être disposées les unes à côté des autres le long d'une circonférence.

Le moyeu de carter intermédiaire 30 peut être en métal, par exemple en titane, en acier, en aluminium, ou en alliage comprenant un ou plusieurs de ces métaux.

Le moyeu de carter intermédiaire 30 peut comprendre également un flasque amont 31. En l'espèce, le flasque amont 31, annulaire, s'étend radialement vers l'intérieur à partir d'une partie amont de la portion tronconique 34. Entre le flasque amont 31 et le flasque aval 32 se trouvent une ou plusieurs structures creuses, s'étendant par exemple dans la continuité de bras qui traversent la veine primaire, et optionnellement dans la continuité des bras structuraux 15b, comme illustré. Ces structures creuses permettent le passage de servitudes, telles que les circuits de lubrification, des moyens de mesure de la vitesse, etc., mais aussi d'un arbre radial 38 dont le rôle sera décrit par la suite.

Au sein de la turbomachine 10, un ensemble pour turbomachine d'aéronef 20 comprend le moyeu de carter intermédiaire 30 précité, mais aussi un support d'équipements 40.

Les figures 2 et 3 montrent que le support d'équipements 40 s'étend selon une portion d'anneau, ici autour de l'axe principal X. Dans ce mode de réalisation, la portion d'anneau couvre un secteur angulaire inférieur à 180°, en l'espèce inférieur à 120°.

Le support d'équipements 40 peut être formé par un boîtier qui présente une face amont 42, tournée vers le moyeu de carter intermédiaire 30, et une face opposée dite face aval 44, tournée vers l'aval de la turbomachine, par exemple vers le carter de turbine 18. La face amont 42 et/ou la face aval 44 peuvent être sensiblement planes, et/ou s'étendre transversalement à l'axe principal X, comme illustré.

On note d'emblée que la face amont 42 est en aval du moyeu de carter intermédiaire 30, grâce aux dispositions qui seront détaillées ci-après.

Par ailleurs, comme indiqué précédemment, le support d'équipements 40 peut renfermer un ou plusieurs trains d'engrenages (non représentés) qui sont entraînés en rotation par un prélèvement de puissance sur un arbre moteur 17 (par exemple l'arbre de corps haute pression) de la turbomachine 10. Un ou plusieurs équipements peuvent être montés sur le support d'équipements 40 et peuvent présenter chacun un arbre d'entraînement qui est couplé à l'un des engrenages du support d'équipements 40. Ces arbres d'entraînement, non représentés sur les figures, peuvent s'étendre selon une direction sensiblement parallèle à l'axe principal X. Parmi ces équipements, il est possible de prévoir un ou plusieurs éléments parmi les suivants, en un ou plusieurs exemplaires : un générateur électrique pour fournir de la puissance électrique à l'aéronef, un alternateur pour fournir du courant électrique à des équipements électriques de la turbomachine, un démarreur pour mettre en route la turbomachine, une pompe hydraulique pour fournir de la puissance hydraulique à l'aéronef, une pompe à carburant, et une pompe de lubrification. Bien entendu, d'autres équipements que ceux mentionnés cidessus peuvent être montés sur le support d'équipements 40.

A titre d'exemple, on a représenté un équipement 46, qui est ici monté sur la face amont 42 du support d'équipements 40. Toutefois, un tel équipement pourrait également être monté sur la face aval 44.

Par ailleurs, l'ensemble pour turbomachine d'aéronef 20 comprend une boîte de transfert 50 comportant un arbre de transmission de puissance 54 configuré pour transmettre de la puissance mécanique, prélevée sur un arbre moteur 17 de la turbomachine, à au moins un équipement monté sur le support d'équipements, le cas échéant via les engrenages mentionnés précédemment.

L'arbre de transmission de puissance 54 peut prélever de la puissance mécanique sur l'arbre moteur 17 par un arbre intermédiaire appelé arbre radial 38, en raison de son positionnement généralement selon une direction radiale de la turbomachine 10. Le cas échéant, la boîte de transfert 50 peut comprendre un renvoi d'angle 56 formant une liaison cinématique entre l'arbre radial 38 et l'arbre de transmission de puissance 54. Par exemple, le renvoi d'angle 56 peut comprendre un accouplement de pignons coniques. Comme illustré sur la figure 1, le renvoi d'angle 56 peut être situé entre le flasque amont 31 et le flasque aval 32 du moyeu de carter intermédiaire 30.

Par ailleurs, comme indiqué précédemment, la boîte de transfert 50 comprend un élément structural 52 fixant rigidement le support d'équipements 40 sur le moyeu de carter intermédiaire 30. En l'espèce, l'élément structural 52 est formé par un fourreau de la boîte de transfert 50 (ci-après également désigné comme « fourreau 52 »), ledit fourreau 52 entourant l'arbre de transmission de puissance 54, ainsi que le montrent les figures 2 et 3.

Ainsi, dans ce mode de réalisation, le fourreau 52 de la boîte de transfert 50 est renforcé de manière à être capable de soutenir le poids du support d'équipements 40 et des équipements 46 qu'il porte, et de maintenir le support d'équipements 40 fixé rigidement au moyeu de carter intermédiaire 30.

Le fourreau 52 est formé principalement par une paroi qui peut être cylindrique, à section circulaire, elliptique, ellipsoïdale, carrée, rectangulaire, polygonale ou autre. Si nécessaire, le fourreau 52 peut comprendre des renforts longitudinaux et/ou circonférentiels pour lui donner la raideur souhaitée. Les renforts peuvent être prévus sur l'intérieur ou, de préférence, sur l'extérieur de la paroi du fourreau 52. Le fourreau peut être métallique, par exemple en acier, titane, aluminium ou alliages comprenant au moins un de ces métaux, ou bien en composite à matrice métallique ou composite à matrice organique.

Le fourreau 52 peut être fixé à une partie circonférentiellement centrale du support d'équipements 40, ou plus généralement à une partie telle que le poids du support d'équipements 40 et des équipements 46 de part et d'autre de cette partie s'équilibrent.

Le fourreau 52 peut être lié au support d'équipement par boulonnage, collier de type V-Band ou tout autre mode de fixation envisageable par l'homme du métier, de préférence démontable, qui soit suffisamment robuste pour permettre la fixation rigide du support d'équipements 40 au moyeu de carter intermédiaire 30.

La boîte de transfert 50 peut être montée contre la face amont 42 du support d'équipements. Plus particulièrement, l'élément structural 52, ici le fourreau, peut être fixé à la face amont 42 du support d'équipements 40, par exemple via une bride boulonnée.

Grâce à ces dispositions, le support d'équipements 40, bien que fixé sur le moyeu de carter intermédiaire 30, peut être positionné en aval du moyeu de carter intermédiaire 30. Ainsi, dans le présent mode de réalisation, le support d'équipements 40 peut être positionné axialement au niveau du carter de compresseur 60, plus particulièrement au niveau du carter de compresseur haute pression, sans toutefois être fixé sur ce carter de compresseur 60. Ainsi, les phénomènes d'ovalisation sont évités, *a fortiori* lorsque le carter de compresseur a une petite taille comparée à la taille de la soufflante ou de l'hélice.

Par ailleurs, l'ensemble pour turbomachine d'aéronef 20 peut comprendre au moins un bras 70, voire au moins deux bras 70, en l'espèce exactement deux bras 70. Sauf mention contraire, on décrira par la suite un des bras 70, l'autre pouvant être identique ou présenter d'autres caractéristiques, notamment parmi celles mentionnées.

Le bras 70 relie le support d'équipement 40 au moyeu de carter intermédiaire 30, afin d'assurer une reprise d'efforts, par exemple des efforts axiaux, par exemple en traction. En l'espèce, les deux bras 70 sont prévus de part et d'autre du fourreau 52, de façon à limiter l'oscillation du support d'équipements 40 autour de la zone de fixation du fourreau 52 sur le support d'équipements 40.

Le bras 70 est fixé au support d'équipements 40 par une première liaison 72 et au moyeu de carter intermédiaire 30 par une deuxième liaison 74. L'une et/ou l'autre de la première liaison 72 et de la deuxième liaison 74 peut être articulée, de sorte que les efforts soient repris uniquement dans l'axe des bras (en traction et/ou compression).

Par exemple, la première liaison 72 peut être une liaison rotule.

Par exemple, la deuxième liaison 74 peut comprendre un plot souple, par exemple comprenant une succession de couches métalliques et de couches d'élastomère précontraint.

Ces liaisons peuvent être interverties, ou rendues identiques l'une à l'autre, ou encore d'autres liaisons peuvent être utilisées, par exemple des liaisons boulonnées, notamment associées à des moyens de réglage du montage des bras pour compenser le caractère hyperstatique de la liaison.

Comme illustré sur la figure 2, la liaison 72 peut être prévue sur une surface périphérique du support d'équipements 40, ou plus généralement sur une surface distincte de la face amont 42 et de la face aval 44, ce qui laisse lesdites faces disponibles pour le montage d'équipements.

Entre les liaisons, le bras 70 peut être une poutre ou une bielle, typiquement métallique ou en composite. La section d'une telle poutre ou bielle peut être dimensionnée par l'homme du métier, par exemple avec une section en forme de H ou une section creuse, notamment de forme circulaire, ellipsoïdale, carrée, rectangulaire ou polygonale.

Comme illustré, l'ensemble pour turbomachine d'aéronef 20 est dépourvu d'autre fixation entre le support d'équipements 40 et le moyeu de carter intermédiaire 30 que l'élément structural 52, à savoir le fourreau, et les deux bras 70 précédemment décrits. Grâce à un tel montage, la fixation du support d'équipements 40 au moyeu de carter intermédiaire 30 est isostatique. D'autres montages isostatiques peuvent toutefois être envisagés.

Par ailleurs, comme il ressort de la figure 2, les liaisons 74 peuvent être prévues entre des ouvertures 36 successives, de sorte que les bras 70 ne gênent pas les sorties de décharge du compresseur.

La figure 3, qui montre la turbomachine 10 en position d'utilisation, illustre que le support d'équipements 40 est fixé sur le moyeu de carter intermédiaire 30 de façon à se trouver en majorité en-dessous de l'axe principal X du moyeu de carter intermédiaire 30. En l'espèce, le support d'équipements 40 est monté à 6h, ce en quoi il est suspendu au moyeu de carter intermédiaire 30. Cette position, qui facilite la maintenance sous aile et la récupération des fluides en fonctionnement et à l'arrêt du moteur, et minimise le risque de feu car les éventuelles fuites sont évacuées par gravité, le cas échéant via la nacelle, rend d'autant plus avantageux le fait de ne pas fixer le support d'équipements 40 sur le carter de compresseur 60.

Bien que la présente description se réfère à des exemples de réalisation spécifiques, des modifications peuvent être apportées à ces exemples sans sortir de la portée générale de l'invention telle que définie par les revendications. En outre, des caractéristiques individuelles des différents modes de réalisation illustrés ou mentionnés peuvent être combinées dans des modes de réalisation additionnels. Par conséquent, la description et les dessins doivent être considérés dans un sens illustratif plutôt que restrictif.

## Revendications

1. Ensemble pour turbomachine d'aéronef (20), comprenant un moyeu de carter intermédiaire (30), un support d'équipements (40), et une boîte de transfert (50) comportant un arbre de transmission de puissance (54) configuré pour transmettre de la puissance mécanique, prélevée en position d'utilisation sur un arbre moteur (17) de la turbomachine, à au moins un équipement (46) monté en position d'utilisation sur le support d'équipements (40), dans lequel la boîte de transfert (50) comprend un élément structural (52) entourant l'arbre de transmission de puissance (54) et fixant rigidement le support d'équipements (40) au moyeu de carter intermédiaire (30), l'ensemble étant **caractérisé en ce qu'**il comprend en outre deux bras (70) reliant le support d'équipements (40) au moyeu de carter intermédiaire (30), les bras (70) étant prévus de part et d'autre de l'élément structural (52).

2. Ensemble pour turbomachine d'aéronef selon la revendication 1, dans lequel le support d'équipements (40) est formé par un boîtier qui présente une face amont (42) située en aval du moyeu de carter intermédiaire (30), et l'élément structural (52) est fixé rigidement à ladite face amont (42).

3. Ensemble pour turbomachine d'aéronef selon la revendication 1 ou 2, l'ensemble étant dépourvu d'autre fixation entre le support d'équipements (40) et le moyeu de carter intermédiaire (30) que l'élément structural (52) et lesdits deux bras (70).

4. Ensemble pour turbomachine d'aéronef selon l'une quelconque des revendications 1 à 3, dans lequel au moins l'un des deux bras (70) est fixé au moyeu de carter intermédiaire (30) et/ou au support d'équipements (40) de manière articulée de façon à reprendre les efforts uniquement en traction.

5. Ensemble pour turbomachine d'aéronef selon l'une quelconque des revendications 1 à 4, dans lequel l'élément structural (52) est formé par un fourreau de la boîte de transfert (50).

6. Ensemble pour turbomachine d'aéronef selon l'une quelconque des revendications 1 à 5, dans lequel l'arbre de transmission de puissance (54) s'étend sensiblement perpendiculairement à la face amont (42) du support d'équipements (40).

7. Ensemble pour turbomachine d'aéronef selon l'une quelconque des revendications 1 à 6, comprenant au moins un équipement (46) monté sur la face amont (42) du support d'équipements (40), ledit équipement (46) ayant une dimension axiale inférieure à la distance entre ladite face amont (42) et un flasque annulaire aval (32) du moyeu de carter intermédiaire (30).

8. Ensemble pour turbomachine d'aéronef selon l'une quelconque des revendications 1 à 7, dans lequel la fixation du support d'équipements (40) au moyeu de carter intermédiaire (30) est isostatique.

9. Ensemble pour turbomachine d'aéronef selon l'une quelconque des revendications 1 à 8, dans lequel le moyeu de carter intermédiaire (30) comprend un flasque annulaire aval (32) auquel est fixé l'élément structural (52), et la boîte de transfert (50) comprend un renvoi d'angle (56) disposé dans le moyeu de carter intermédiaire (30) en amont du flasque annulaire aval (32), ledit renvoi d'angle (56) reliant l'arbre de transmission de puissance (54) à l'arbre moteur de la turbomachine par l'intermédiaire d'un arbre radial (38) de la turbomachine.

10. Ensemble pour turbomachine d'aéronef selon l'une quelconque des revendications 1 à 9, dans lequel le support d'équipements (40) est fixé au moyeu de carter intermédiaire (30) de façon à se trouver, en position d'utilisation, en majorité en-dessous d'un axe (X) du moyeu de carter intermédiaire (30).

11. Turbomachine d'aéronef (10) comprenant un ensemble (20) selon l'une quelconque des revendications 1 à 10.

12. Turbomachine d'aéronef (10) selon la revendication 11, comprenant, en aval du carter intermédiaire (14), un carter de compresseur (60) et un carter de chambre de combustion (16), et dans lequel l'ensemble est dépourvu de fixation entre le support d'équipements (40) et le carter de compresseur (60) ainsi que le carter de chambre de combustion (16).

## Patentansprüche

1. Flugzeugturbinentriebwerksanordnung (20), umfassend eine Zwischengehäusenabe (30), einen Halter für Ausrüstungen (40) und ein Verteilergetriebe (50), umfassend eine Kraftübertragungswelle (54), die konfiguriert ist, um die mechanische Kraft, die in der Verwendungsposition von einer Motorwelle (17) des Turbinentriebwerks abgezweigt wurde, auf mindestens eine Ausrüstung (46) zu übertragen, die in der Verwendungsposition auf den Halter für Ausrüstungen (40) montiert wurde, wobei das Verteilergetriebe (50) ein strukturelles Element (52) umfasst, das die Kraftübertragungswelle (54) umgibt und den Halter für Ausrüstungen (40) starr an die Zwischengehäusenabe (30) fixiert, wobei die Anordnung **dadurch gekennzeichnet ist, dass** sie außerdem zwei Arme (70) umfasst, die den Halter für Ausrüstungen (40) mit der Zwischengehäusenabe (30) verbinden, wobei die Arme (70) auf beiden Seiten des strukturellen Elements (52) vorgesehen sind.

2. Flugzeugturbinentriebwerksanordnung nach Anspruch 1, wobei der Halter für Ausrüstungen (40) durch ein Gehäuse gebildet ist, das eine vorgelagerte Seite (42) darstellt, die sich nachgelagert von der Zwischengehäusenabe (30) befindet, und wobei das strukturelle Element (52) an der vorgelagerten Seite (42) starr fixiert ist.

3. Flugzeugturbinenriebwerksanordnung nach Anspruch 1 oder 2, wobei die Anordnung keine andere Fixierung zwischen dem Halter für Ausrüstungen (40) und der Zwischengehäusenabe (30) aufweist als das strukturelle Element (52) und die zwei Arme (70).

4. Flugzeugturbinentriebwerksanordnung nach einem der Ansprüche 1 bis 3, wobei mindestens einer der zwei Arme (70) an die Zwischengehäusenabe (30) und/oder den Halter für Ausrüstungen (40) auf gelenkige Weise fixiert ist, um nur die Zugkräfte wieder aufzunehmen.

5. Flugzeugturbinentriebwerksanordnung nach einem der Ansprüche 1 bis 4, wobei das strukturelle Element (52) von einer Hülle des Verteilergetriebes (50) gebildet ist.

6. Flugzeugturbinentriebwerksanordnung nach einem der Ansprüche 1 bis 5, wobei sich die Kraftübertragungswelle (54) im Wesentlichen senkrecht zur vorgelagerten Seite (42) des Halters für Ausrüstungen (40) erstreckt.

7. Flugzeugturbinentriebwerksanordnung nach einem der Ansprüche 1 bis 6, umfassend mindestens eine Ausrüstung (46), die auf der vorgelagerten Seite (42) des Halters für Ausrüstungen (40) montiert ist, wobei die Ausrüstung (46) eine axiale Abmessung aufweist, die geringer als der Abstand zwischen der vorgelagerten Seite (42) und einem ringförmigen nachgelagerten Flansch (32) der Zwischengehäusenabe (30) ist.

8. Flugzeugturbinentriebwerksanordnung nach einem der Ansprüche 1 bis 7, wobei die Fixierung des Halters für Ausrüstungen (40) an die Zwischengehäusenabe (30) isostatisch ist.

9. Flugzeugturbinenriebwerksanordnung nach einem der Ansprüche 1 bis 8, wobei die Zwischengehäusenabe (30) einen ringförmigen nachgelagerten Flansch (32) umfasst, an den das strukturelle Element (52) fixiert ist, und das Verteilergetriebe (50) eine Eckumlenkung (56) umfasst, die in der Zwischengehäusenabe (30) vorgelagert von dem nachgelagerten ringförmigen Flansch (32) angeordnet ist, wobei die Eckumlenkung (56) die Kraftübertragungswelle (54) mit der Motorwelle des Turbinentriebwerks mit Hilfe einer radialen Welle (38) des Turbinentriebwerks verbindet.

10. Flugzeugturbinentriebwerksanordnung nach einem der Ansprüche 1 bis 9, wobei der Halter für Ausrüstungen (40) derart an die Zwischengehäusenabe (30) fixiert ist, dass er sich in der Verwendungsposition zum Großteil unter einer Achse (X) der Zwischengehäusenabe (30) befindet.

11. Flugzeugturbinentriebwerk (10), umfassend eine Anordnung (20) nach einem der Ansprüche 1 bis 10.

12. Flugzeugturbinentriebwerk (10) nach Anspruch 11, umfassend nachgelagert von der Zwischengehäusenabe (14) ein Kompressorgehäuse (60) und ein Brennkammergehäuse (16), und wobei die Anordnung keine Fixierung zwischen dem Halter für Ausrüstungen (40) und dem Kompressorgehäuse (60) sowie dem Brennkammergehäuse (16) aufweist.

## Claims

1. An assembly (20) for an aircraft turbine engine comprising an intermediate casing hub (30), an accessory gearbox (40), and a transfer case (50) including a power transmission shaft (54) configured to transmit mechanical power, taken, in the operating position, off an engine shaft (17) of the turbine engine, to at least one accessory (46) mounted, in the operating position, on the accessory gearbox (40), wherein the transfer case (50) comprises a structural element (52) surrounding the power transmission shaft (54) and rigidly attaching the accessory gearbox (40) to the intermediate casing hub (30), the assembly being **characterized by** further comprising two arms (70) connecting the accessory gearbox (40) to the intermediate casing hub (30), the arms (70) being provided on both sides of the structural element (52).

2. The assembly for an aircraft turbine engine according to claim 1, wherein the accessory gearbox (40) is formed by a housing which has an upstream face (42) located downstream of the intermediate casing hub (30), and the structural element (52) is rigidly attached to said upstream face (42).

3. The assembly for an aircraft turbine engine according to claim 1 or 2, the assembly being bereft of other attachment between the accessory gearbox (40) and the intermediate casing hub (30) than the structural element (52) and said two arms (70).

4. The assembly for an aircraft turbine engine according to any one of claims 1 to 3, wherein at least one of the two arms (70) is attached to the intermediate casing hub (30) and/or to the accessory gearbox (40) in an articulated manner so as to transfer the forces only in tension.

5. The assembly for an aircraft turbine engine according to any one of claims 1 to 4, wherein the structural element (52) is formed by an envelope of the transfer case (50).

6. The assembly for an aircraft turbine engine according to any one of claims 1 to 5, wherein the power transmission shaft (54) extends substantially perpendicular to the upstream face (42) of the accessory gearbox (40).

7. The assembly for an aircraft turbine engine according to any one of claims 1 to 6, comprising at least one accessory (46) mounted on the upstream face (42) of the accessory gearbox (40), said accessory (46) having an axial dimension smaller than the distance between said upstream face (42) and a downstream annular flange (32) of the intermediate casing hub (30).

8. The assembly for an aircraft turbine engine according to any one of claims 1 to 7, wherein the attachment of the accessory gearbox (40) to the intermediate casing hub (30) is statically determinate.

9. The assembly for an aircraft turbine engine according to any one of claims 1 to 8, wherein the intermediate casing hub (30) comprises a downstream annular flange (32) to which the structural element (52) is attached, and the transfer case (50) comprises an angle gearbox (56) located in the intermediate casing hub (30) upstream of the downstream annular flange (32), said angle gearbox (56) connecting the power transmission shaft (54) to the engine shaft of the turbine engine by means of a radial shaft (38) of the turbine engine.

10. The assembly for an aircraft turbine engine according to any one of claims 1 to 9, wherein the accessory gearbox (40) is attached to the intermediate casing hub (30) so as to be positioned, in the operating position, mostly below an axis (X) of the intermediate casing hub (30).

11. An aircraft turbine engine (10) comprising an assembly (20) according to any one of claims 1 to 10.

12. The aircraft turbine engine (10) according to claim 11 comprising, downstream of the intermediate casing (14), a compressor casing (60) and a combustion chamber casing (16), and wherein the assembly is bereft of attachment between the accessory gearbox (40) and the compressor casing (60) as well as the combustion chamber casing (16).
